Europäisches Patentamt

European Patent Office

Office européen des brevets

(11) Veröffentlichungsnummer : **0 093 283**
**B1**

## (12) EUROPÄISCHE PATENTSCHRIFT

(45) Veröffentlichungstag der Patentschrift :
08.07.87

(21) Anmeldenummer : 83103513.4

(22) Anmeldetag : 12.04.83

(51) Int. Cl.⁴ : **B 60 J   1/20**, B 60 J   9/02,
B 60 J   1/02, B 60 R   13/06

(54) **Verfahren und Vorrichtung zum Ablösen von Fahrzeugscheiben.**

(30) Priorität : 29.04.82 DE 3215892

(43) Veröffentlichungstag der Anmeldung :
09.11.83 Patentblatt 83/45

(45) Bekanntmachung des Hinweises auf die Patenterteilung : 08.07.87 Patentblatt 87/28

(84) Benannte Vertragsstaaten :
DE FR GB IT

(56) Entgegenhaltungen :
EP-A- 0 061 198
DE-C-   673 951
FR-A- 2 179 511
FR-A- 2 199 506
FR-A- 2 227 985
US-A- 3 430 394

(73) Patentinhaber : AUDI AG
Postfach 220
D-8070 Ingolstadt (DE)

(72) Erfinder : Härdl, Stefan
Sternstrasse 5
D-8074 Gaimersheim (DE)
Erfinder : Donald, Alexander
Marienstrasse 8
D-8068 Pfaffenhofen (DE)
Erfinder : Stellner, Jürgen
Halbritterstrasse 37
D-8070 Ingolstadt (DE)

(74) Vertreter : Le Vrang, Klaus
AUDI AG Postfach 220 Patentabteilung
D-8070 Ingolstadt (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zum Ablösen von im Randbereich verklebten Fahrzeugscheiben. Weiterhin beschreibt sie eine Vorrichtung zur Durchführung des Verfahrens.

In zunehmendem Maße werden mit der voranschreitenden Entwicklung des Klebstoffes heute die Fahrscheiben eines Fahrzeuges mit der Karosserie verklebt, da dadurch eine größere Freiheit im Aufbau, eine bessere Festigkeit und auch ein ansprechendes Äußeres erreicht werden.

Als problematisch bei verklebten Scheiben erweist sich, daß das bei Reparaturarbeiten oder nach Unfallinstandsetzungen notwendige Heraustrennen von Scheiben sehr arbeitsintensiv ist und einen hohen Grad der Anstrengung erfordert. Bislang wird beispielsweise bei der Windschutzscheibe eines Fahrzeuges die Ablösung derart vorgenommen, daß ein kurzes Stück Draht an einer Stelle mit Hilfe einer Ahle durchgezogen wird durch den Klebebereich und dann mit erheblichem Kraftaufwand versucht wird, fortschreitend diesen Draht quer zum Randbereich der Scheibe durch die Klebestelle weiterzuziehen. Weitere versuchte Lösungsmöglichkeiten sind scharfe Messer oder erhitzte Teile, die im Randbereich der Scheibe geführt werden.

All diesen Verfahren ist zu eigen, daß sie einen Zeitaufwand von etwa einer Arbeitsstunde erfordert, darüber hinaus sind Beschädigungen der Karosserierandbereiche insbesondere im Lack, oder auch Beschädigungen des auf der Innenseite liegenden Armaturenbrettes fast unvermeidbar.

Ein gattungsgemäßes Verfahren kann der FR-A 2 227 985 entnommen werden. Dort ist vorgesehen, daß in Notfällen ein im Bereich der Außenseite der Scheibe in die Dichtung eingebetteter Reißfaden, der die Scheibe umfangsmäßig umgibt, durch eine drehbare Achse aufgewickelt wird und dabei in das Innere des Fahrzeuges gezogen wird. Im unmittelbaren Bereich der Drehachse läßt sich der Faden durch ein Verdrehen verhältnismäßig einfach in das Innere hereinziehen, in den entfernteren Bereichen, in denen der Faden die Dichtung unter einem sehr flachen Winkel durchschneiden muß, ist das Auftrennen der Dichtung auf diese Weise nur aufgrund der weichen Gummieigenschaften möglich.

Weiterhin ist aus dem deutschen Gebrauchsmuster 1 715 159 ein Aufreißprofil bekannt, bei dem ein die Scheibe haltendes Gummiprofil in seinem Inneren eingelagert einen Aufreißfaden besitzt, der im Notfall, um die Scheibe herauszunehmen, herausgerissen werden kann und dabei das Gummiprofil auftrennt. Derartige Aufreißfäden müssen bereits bei der Fertigung in das aufzutrennende Profil eingelagert werden, außerdem ist das Einlagern in Verklebungen technisch problematisch.

Aufgabe der Erfindung ist es, das Heraustrennen von verklebten Fahrzeugscheiben zu vereinfachen.

Die Aufgabe wird gelöst gemäß dem Kennzeichenteil des Anspruches 1.

Weiterhin ist es Aufgabe der Erfindung, eine geeignete Vorrichtung zum Abtrennen der Fahrzeugscheiben anzugeben. Diese Aufgabe wird gelöst durch den Kennzeichenteil des Anspruchs 5.

Das erfindungsgemäße Verfahren sieht vor, daß ein Draht um den Außenumfang der Scheibe gelegt wird. Dieser Draht kommt in der Nut, die auch die Abdeckung oder Zierleiste zwischen Scheibe und Karosserie aufnimmt, zu liegen, und befindet sich somit in Anlage an der Seite der Scheibe, die dem Fahrzeuginnern zugewandt ist, in unmittelbarer Nähe der Kleberaupe. An einer Stelle wird der Draht mit beiden Enden durch die Kleberaupe, beispielsweise mit Hilfe einer Ahle, in das Innere des Fahrzeugs geführt. Dann wird das eine Ende des Drahtes in das Innere des Fahrzeugs gezogen, während das andere Ende fixiert bleibt. Dabei findet das Hereinziehen parallel zur Scheibenoberfläche statt, der Draht wird also nicht, wie bei den Vorrichtungen nach dem Stand der Technik, in etwa rechtwinkelig zur Scheibenoberfläche in das Fahrzeuginnere geführt.

Durch diese Führung durchschneidet der Draht die Kleberaupe und trennt sie auf. Durch die Führung parallel zur Scheibe wird ein saubers Durchtrennen, das mühelos durchzuführen ist, erreicht.

In einer bevorzugten Ausführung des Verfahrens ist vorgesehen, daß der Draht in Eckpunkten umgelenkt wird. Durch diese Führung werden höhere, nicht quer zu der Kleberaupe wirkende Kräfte vermieden, die sonst zu einem Reißen des Drahtes führen könnten. Die Umlenkung verbreitet das Verhältnis der wirksamen Schneidkraft zur Zugkraft am Draht.

Weiterhin ist eine Vorrichtung offenbart, die zum Aufwickeln des Drahtes dient, so daß das Hineinziehen in das Innere ohne große Schwierigkeiten durchgeführt werden kann. Diese Vorrichtung stützt sich an der Scheibe ab und trägt eine Trommel, auf der der Draht aufgewickelt werden kann.

Der Wickelvorgang kann von Hand durchgeführt werden, was eine gewisse Feinfühligkeit mit sich bringt und dementsprechend ein Reißen des Drahtes verhindern kann. Es ist jedoch genauso möglich, das Drehen der Trommel, um den Draht aufzuwickeln, beispielsweise durch einen Elektromotor durchzuführen.

Im folgenden wird die Erfindung anhand der Figuren im einzelnen näher erläutert. Es zeigen :

Figur 1 eine schematische Darstellung der Aufwickelvorrichtung ;

Figur 2 einen schematischen Schnitt durch den Randbereich der Scheibe, mit Hilfe derer die Lage des Drahtes erläutert wird ; und

Figur 3 die schematische Darstellung der Drahtführung.

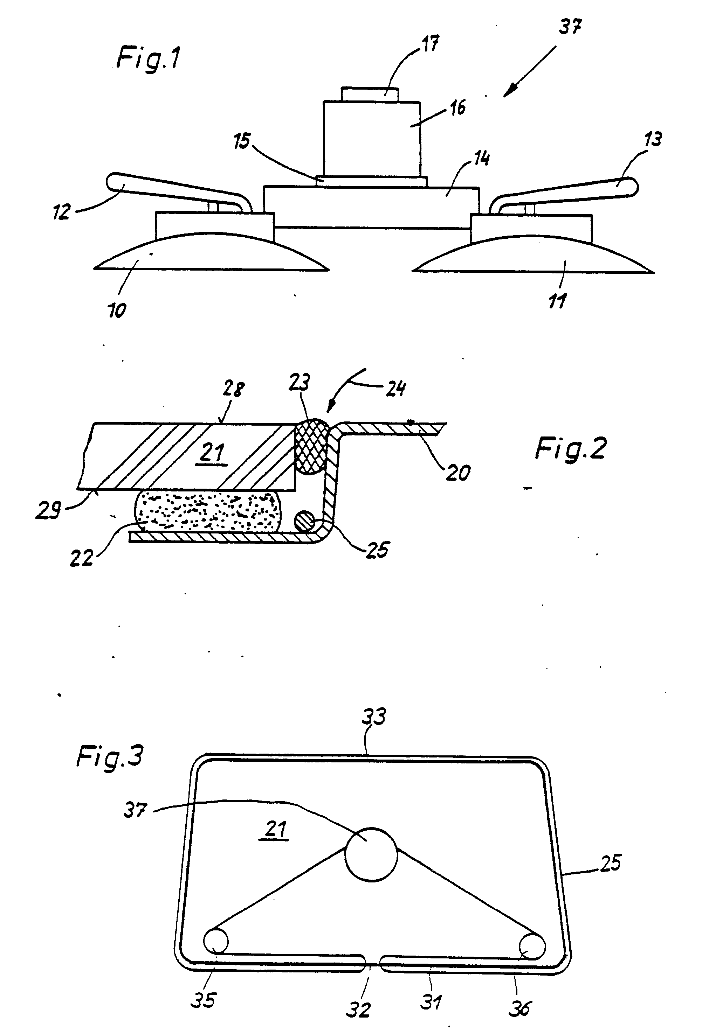

In Fig. 1 ist ein Gerät 37 dargestellt, das zum Aufwickeln eines Drahtes 25 vorgesehen ist. Das Gerät weist zwei Gummisauger 10, 11 auf, die auf die Scheibe 21 gesetzt werden können. Zwei handbetätigte Hebel 12 und 13 sind vorgesehen, um das Innere der Gummisauger 10 und 11 zu evakuieren, so daß sich die Vorrichtung 37 fest an die Scheibe ansaugt und auch durch größere Kräfte nicht versetzt oder abgelöst werden kann. Die beiden Gummisauger 10 und 11 sind mit Hilfe eines Steges 14 verbunden, der ein Kugellager 15 trägt, durch das eine Trommel 16 drehbar gelagert ist. Diese Trommel 16, die in etwa senkrecht auf dem Steg 14 steht, dient zum Aufspulen des Drahtes 25. An der Oberseite der Trommel 16 befindet sich eine geeignete Übertragungsmöglichkeit 17, um die aufzuwendenden Drehkräfte auf die Trommel 16 zu übertragen. Beispielsweise kann es sich bei der Übertragungsmaßnahme 17 um einen Kreuzschlitz handeln, in den ein entsprechender Zapfen eingesetzt wird, oder um eine sechseckige Ausnehmung, in die ein entsprechend geformter Zapfen form- und kraftschlüssig eingreifen kann. Vorteilhafterweise wird die Trommel dabei beispielsweise durch einen Ratschenmechanismus daran gehindert, den Draht wieder abzuspulen.

Es ist natürlich auch möglich, im Bereich des Steges 14 einen Elektromotor vorzusehen, der die Trommel 16 antreibt.

Der auf die Trommel 16 aufzuwickelnde Draht 25 wird um die Scheibe 21 geführt. Fig. 2 zeigt die Lage des Drahtes im Schnitt durch die Scheibe. Das Blech der Karosserie 20 bildet einen Flansch, an dem die Scheibe 21 verklebt ist. Die Seite 28 der Scheibe 21 weist dabei nach außen, während die Seite 29 der Scheibe 21 in das Innere des Fahrzeuges zeigt. Die Scheibe 21 ist auf ihrer Innenseite 29 mit einer Kleberaupe 22 die beispielsweise aus einem PU-Kleber besteht, mit dem Flansch 20 der Karosserie verklebt die Fuge zwischen Scheibe 21 und Karosserieteil 20 wird beispielsweise mit einer Abdeckung oder Zierleiste 23 abgedeckt. Der zum Heraustrennen der Scheibe 21 dienende Draht 25 wird an der Stelle, die mit Hilfe des Pfeiles 24 gekennzeichnet ist, zwischen die Abdeckung 23 und das Karosserieteil 20 eingeführt und kommt dadurch, wie in Fig. 2 dargestellt, zur Ruhe. Wichtig ist, daß er sich in dieser Lage bereits auf der dem Innenraum zugewandten Seite 29 der Scheibe 21 befindet, so daß er direkt mit der Kleberaupe 22 in Berührung treten kann.

Eine bevorzugte Drahtführung ist in Fig. 3 beschrieben, wobei Umlenkrollen 35 und 36 in den Eckpunkten vorgesehen sind. Die Scheibe 21 besitzt einen Rand 31, entlang dem der Draht 25 geführt wird und zwar in der Stellung, die in Fig. 2 gezeigt ist. Im unteren Mittelbereich der Scheibe, bezeichnet mit dem Bezugszeichen 32, wird der Draht nach innen geführt und kann von dort aus direkt der Vorrichtung 37 zum Aufwickeln zugeführt werden. Da dann jedoch gerade in diesem Bereich, in dem die Kleberaupe 22 besondere Festigkeit aufweist, der Draht 25 rechtwinkelig zum Scheibenrand 31 und zur Kleberaupe 22 gezogen wird, ist die Belastung des Drahtes 25 verhältnismäßig hoch und an seiner Festigkeit werden besondere Ansprüche gestellt. Der nutzbaren Drahtfestigkeit kommt ferner zugute, daß die beim Durchtrennen der Kleberaupe auftretende Erwärmung den Draht nicht mehrmals an der gleichen Stelle belastet und so zum Festigkeitsabfall führt. Der optimale Verlauf des Drahtes 25 ist, wenn er an der Außenseite der Kleberaupe parallel zu dieser geführt wird und an der Schnittstelle um 180° wiederum nach hinten geführt wird. Um dies im besonders kritischen Bereich im unteren Teil der Scheibe 21 zu erreichen, sind zwei Umlenkrollen 35 und 36 in den unteren Ecken der Scheibe 21 vorgesehen, die den Draht 25 in der gewünschten Weise umlenken.

Die Durchführung des Schneidvorganges sieht so aus, daß der Draht 25 im unteren Zentralbereich 32 nach innen geführt wird, anschließend um die Unlenkrollen 35 bzw. 36 mit seinen jeweiligen Enden gelegt wird und mit der Aufwickelvorrichtung 37 verbunden wird. Das eine Ende des Drahtes 25 wird auf die Trommel 16 geführt und von dieser aufgewickelt. Das andere Ende des Drahtes 25 wird dabei durch geeignete Maßnahmen festgehalten.

Der Aufwickelvorgang wird beendet, wenn der Draht fortschreitend den Rand 31 durchtrennt hat, bis er im oberen Abschnitt etwa in der Mitte, in Fig. 3 mit dem Bezugszeichen 33 versehen, angekommen ist. Dann wird dieses Ende des Drahtes fixiert, und das andere Ende des Drahtes 25 wird aufgewickelt, so daß nunmehr wiederum beginnend im unteren Mittelabschnitt 32 des Randes 31 die andere Hälfte der Scheibe 25 abgetrennt wird.

Versuche haben gezeigt, daß damit es möglich wird, eine Scheibe in ca. 10 Minuten durch einen einzigen Monteur heraustrennen zu lassen. Bisherige durchschnittliche Bearbeitungszeit, die nicht von dem erfindungsgemäßen Verfahren Gebrauch machten, liegt bei etwa einer halben Stunde für zwei Monteure.

## Patentansprüche

1. Verfahren zum Ablösen von in den Randbereichen mit einer Auflage (22) verklebten Fahrzeugscheiben (21), wobei man

a) einen Draht (25) um den Umfang der Scheibe (21), anliegend am Klebebereich (22), führt,

b) die Enden des Drahtes (25) an einer Stelle (32) durch den Klebebereich (22) in das Innere des Fahrzeugs führt, und

c) den Draht (25) unter Festlegung mindestens eines Endes in das Innere des Fahrzeuges zieht, dadurch gekennzeichnet, daß man

d) den Draht (25) vom Fahrzeuginnern aus gesehen einwärts der durch die Innenseite der Scheibe gebildeten Ebene am Außenumfang des Klebebereiches (22) anlegt, und

e) in einer Ebene einwärtszieht, die in etwa parallel zu der durch die Scheibe gebildeten Ebene liegt.

2. Verfahren nach Anspruch 1, dadurch gekennzeichnet, daß der Draht (25) in vorwählbaren Bereichen mit der Scheibe (21) durch Umlenkrollen (36) umgelenkt wird und/oder der Winkel des Drahtes (25) zum Scheibenrand (33) durch Versetzen der Wickelvorrichtung (16) günstig beeinflußt wird.

3. Verfahren nach Anspruch 2, dadurch gekennzeichnet, daß die vorwählbaren Bereiche der Scheibe (21), in denen der Draht (25) durch Umlenkrollen (36) umgelenkt wird, zumindest einen Eckbereich der Scheibe (21) umfassen.

4. Verfahren nach einem der Ansprüche 1 bis 3, dadurch gekennzeichnet, daß der Winkel des Drahtes (25) zum Rand der Scheibe während des Einzugsvorganges durch Verschiebung der Aufwickelstelle verändert wird.

5. Vorrichtung zur Durchführung des Verfahrens nach einem der Ansprüche 1 bis 3, mit einer Aufwickelvorrichtung (16) und einem von der Aufwickelvorrichtung (16) aufzunehmenden Draht (25), der um die Scheibe (21) geführt wird, gekennzeichnet durch zwei Gummisauger (10,11), um die Aufwickelvorrichtung (16) an der Scheibe (21) anhaften zu lassen und zu fixieren, wobei die Gummisauger (10, 11) über einen Steg (14) miteinander verbunden sind, der eine Trommel (16) zum Aufwickeln des Drahtes (25) trägt, deren Achse im montierten Zustand der Vorrichtung etwa senkrecht zur Scheibenoberfläche steht.

6. Vorrichtung nach Anspruch 5, dadurch gekennzeichnet, daß die Trommel (16) Mittel (17) zum Übertragen einer Antriebskraft aufweist.

7. Vorrichtung nach einem der Ansprüche 5 und 6, dadurch gekennzeichnet, daß im Randbereich der Scheibe (21), vorzugsweise an Eckpunkten, mindestens eine Umlenkrolle (35,36) vorgesehen ist.

## Claims

1. Method of releasing vehicle window panes (21) which are secured in the edge regions with a coating (22) of adhesive substance, wherein
a) a wire (25) is taken about the periphery of the pane (21), adjacently to the adhesive region (22),
b) at one place (32) the ends of the wire (25) are taken through the adhesive region (22) into the interior of the vehicle, and
c) at least one end of the wire (25) is secured, and the said wire is drawn into the interior of the vehicle, characterised in that
d) the wire (25) is applied against the outer periphery of the adhesive region (22) internally, as seen from the interior of the vehicle, of the plane formed by the inner side of the pane, and
e) the said wire is drawn inwardly in a plane which is substantially parallel to the plane formed by the pane.

2. Method according to claim 1, characterised in that in preselectable regions of the pane (21) the wire (25) is guided through a direction change by guide pulleys (36) and/or the angle of the wire (25) relatively to the pane edge (33) is advantageously influenced by offsetting the winding device (16).

3. Method according to claim 2, characterised in that the preselectable regions of the pane (21) at which the wire (25) is made to change direction by means of guide pulleys (36) comprise at least one corner region of the pane (21).

4. Method according to one of claims 1 to 3, characterised in that the angle of the wire (25) relatively to the edge of the pane · during the drawing-in operation is varied by displacing the winding station.

5. Device for carrying out the method according to one of claims 1 to 3, with a winding device (16) and a wire (25) which extends around the pane (21) and which is to be taken up by the winding device (16), characterised by two rubber suction elements (10,11) for making the winding device (16) stick to the pane (21), fixing it to the latter, the rubber suction elements (10,11) being connected to one another by means of a bridge element (14) carrying a drum (16) for winding-up the wire (25), the axis of the said drum in the fitted state of the device being situated approximately at right angles to the pane surface.

6. Device according to claim 5, characterised in that the drum (16) has means (17) for transmitting a driving force.

7. Device according to one of claims 5 and 6, characterised in that at least one guide pulley (35,36) is provided in the edge region of the pane (21), preferably at corner points.

## Revendications

1. Procédé pour détacher des glaces de véhicules automobiles (21) collées dans leur région bordante par une couche de colle (22), consistant
a) à faire passer un fil d'acier (25) autour de la périphérie de la glace (21), en position contiguë à la région collée (22),
b) à faire passer les extrémités du fil d'acier (25) à l'intérieur du véhicule en un point (32), à travers la région collée (22) et
c) à exercer une traction sur le fil d'acier (25) vers l'intérieur du véhicule en fixant au moins l'une de ses extrémités, caractérisé en ce que
d) l'on place le fil d'acier (25) contre le périmètre extérieur de la région collée (22) en dedans, par rapport à l'intérieur du véhicule, du plan formé par la face interne de la glace, et
e) on exerce une traction vers l'intérieur dans un plan qui est à peu près parallèle au plan formé par la glace.

2. Procédé selon la revendication 1, caractérisé en ce que, dans des régions préalablement choisies de la glace (21), le fil d'acier (25) est renvoyé par des poulies de renvoi (36) et/ou l'angle du fil d'acier (25) par rapport au bord (33) de la glace est influencé favorablement par déplacement du dispositif d'enroulement (16).

3. Procédé selon la revendication 2, caractérisé en ce que les régions préalablement choisies de la glace (21), dans lesquelles le fil d'acier (25) est renvoyé par des poulies de renvoi (36), comprennent au moins une région d'angle de glace (21).

4. Procédé selon l'une quelconque des revendications 1 à 3, caractérisé en ce que l'angle du fil d'acier (25) par rapport au bord de la glace est modifié, pendant l'opération de traction vers l'intérieur, par déplacement du point d'enroulement.

5. Dispositif pour l'exécution du procédé selon l'une quelconque des revendications 1 à 3, comportant un dispositif d'enroulement (16) et un fil d'acier (25) destiné à être saisi par le dispositif d'enroulement (16) et passant autour de la glace (21), caractérisé par deux ventouses de caoutchouc (10, 11) pour faire adhérer le dispositif d'enroulement (16) à la glace (21) et le fixer, ces ventouses de caoutchouc (10,11) étant unies l'une à l'autre par une traverse (14) qui porte un tambour (16) pour l'enroulement du fil d'acier (25), tambour dont l'axe, à l'état monté du dispositif, est à peu près perpendiculaire à la surface de la glace.

6. Dispositif selon la revendication 5, caractérisé en ce que le tambour (16) comporte des moyens (17) pour la transmission d'une force motrice.

7. Dispositif selon la revendication 5 ou 6, caractérisé en ce qu'il est prévu au moins une poulie de renvoi (35,36) dans la région du bord de la glace (21), de préférence dans des angles de celle-ci.

Fig.1

Fig.2

Fig.3